# EUROPEAN PATENT APPLICATION

(11) **EP 4 765 271 A1**
(43) Date of publication of application: **24.06.2026**
(21) Application number: 25803994.0
(22) Date of filing: 04.03.2025
(51) Int. Cl.: H01M 10/04, B65H 37/04

(54) **ELECTRODE ASSEMBLY MANUFACTURING METHOD, ELECTRODE ASSEMBLY MANUFACTURING SYSTEM, AND ELECTRODE ASSEMBLY**

(30) Priority: 14.05.2024 KR 20240063471; 17.10.2024 KR 20240142163
(71) Applicant: LG Energy Solution, Ltd., Seoul 07335 (KR)
(72) Inventor: AN, Mi Ae, Daejeon 34122 (KR); SA, Kwang Jin, Daejeon 34122 (KR)
(74) Representative: Goddar, Heinz J.
(86) International application number: PCT/KR2025/099515
(87) International publication number: WO 2025/239757

(57) **Abstract**

The present disclosure relates to an electrode assembly manufacturing method, an electrode assembly manufacturing system, and an electrode assembly, and more specifically, to an electrode assembly manufacturing method that couples a positive electrode and a negative electrode so that the positive electrode and the negative electrode have coincident center lines, an electrode assembly manufacturing system that couples a positive electrode and a negative electrode so that the positive electrode and the negative electrode have coincident center lines, and an electrode assembly in which the positive electrode and the negative electrode have coincident center lines. An electrode assembly manufacturing method according to the present disclosure may include a marking step of forming a mark on a tab portion of each of a first electrode and a second electrode having opposite polarities; and a coupling step of coupling the first electrode and the second electrode so that the first electrode tab and the second electrode tab are disposed in opposite directions. In this coupling step, an imaginary line connecting the mark formed on the first electrode tab and the mark formed on the second electrode tab may be parallel to the longitudinal direction of the first electrode and the second electrode.

## Description

### TECHNICAL FIELD

### CROSS-REFERENCE TO RELATED APPLICATIONS

The present application claims priority to Korean Patent Application No. 10-2024-0063471, filed on May 14, 2024 and Korean Patent Application No. 10-2024-0142163, filed on October 17, 2024 in the Republic of Korea, the disclosures of which are incorporated herein by reference.

### TECHNICAL FIELD

The present disclosure relates to an electrode assembly manufacturing method, an electrode assembly manufacturing system, and an electrode assembly, and more specifically, to an electrode assembly manufacturing method that couples a positive electrode and a negative electrode so that the positive electrode and the negative electrode have coincident center lines, an electrode assembly manufacturing system that couples a positive electrode and a negative electrode so that the positive electrode and the negative electrode have coincident center lines, and an electrode assembly in which the positive electrode and the negative electrode have coincident center lines.

### BACKGROUND ART

A secondary battery (rechargeable battery) is a battery that can be charged and discharged, unlike a primary battery that cannot be recharged. A low-capacity secondary battery is used in small portable electronic devices such as mobile phones, laptop computers and camcorders, while a high-capacity secondary battery is widely used as a power source for driving motors in hybrid vehicles or the like.

Such a secondary battery includes an electrode assembly in which a positive electrode and a negative electrode are alternately stacked with a separator therebetween. The stacking of the positive electrode, negative electrode, and separator may be performed by separating the positive electrode from a positive electrode carrying sheet that carries the positive electrode, separating the negative electrode from a negative electrode carrying sheet that carries the negative electrode, and then thermally fusing the positive electrode and the negative electrode with the separator therebetween.

However, in the case of the above method, since the positive electrode, negative electrode, and separator are bonded at once, it is easy for the centers of the positive electrode and the negative electrode to be misaligned, resulting in a problem of assembly tolerance.

### SUMMARY

### TECHNICAL PROBLEM

The present disclosure is designed to solve the problems of the related art, and therefore the present disclosure is directed to providing an electrode assembly manufacturing method that couples a positive electrode and a negative electrode so that the positive electrode and the negative electrode have coincident center lines, an electrode assembly manufacturing system that couples a positive electrode and a negative electrode so that the positive electrode and the negative electrode have coincident center lines, and an electrode assembly in which the positive electrode and the negative electrode have coincident center lines.

### TECHNICAL SOLUTION

An electrode assembly manufacturing method according to the present disclosure may include a marking step of forming a mark on a tab portion of each of a first electrode and a second electrode having opposite polarities; and a coupling step of coupling the first electrode and the second electrode so that the first electrode tab and the second electrode tab are disposed in opposite directions, wherein in the coupling step, an imaginary line connecting the mark formed on the first electrode tab and the mark formed on the second electrode tab may be parallel to the longitudinal direction of the first electrode and the second electrode.

The marking step may include a first marking step of recognizing a widthwise center line of the first electrode tab using imaging equipment and a computer, and forming a mark on a portion of the widthwise center line of the first electrode tab; and a second marking step of recognizing a widthwise center line of the second electrode tab using imaging equipment and a computer, and forming a mark on a portion of the widthwise center line of the second electrode tab.

The coupling step may include a step of coupling the first electrode and the second electrode so that the imaginary line coincides with the widthwise center lines of the first electrode and the second electrode.

The first marking step and the second marking step may be performed simultaneously or sequentially.

The marking step may include a step of applying a colored liquid substance to the first electrode tab and the second electrode tab; and a step of drying the colored liquid substance to form a mark.

The electrode assembly manufacturing method may further include a verification step that is performed after the coupling step and checks whether the widthwise center line of the first electrode coincides with the widthwise center line of the second electrode.

The verification step may include a step of checking whether the imaginary line is parallel to the longitudinal direction of each of the first electrode and the second electrode.

The marking step may include a step of forming the marks on the tab portions of the first electrode and the second electrode being transferred along conveyor belts.

The electrode assembly manufacturing method may further include an attachment step that is performed after the marking step and attaches a separator to at least one of the first electrode and the second electrode.

The attachment step may include attaching a first separator sheet to one surface of the first electrode; and attaching a second separator sheet to the other surface of the first electrode.

The coupling step may include a step of coupling the first electrode and the second electrode so that the second separator sheet is positioned between the first electrode and the second electrode.

Meanwhile, an electrode assembly manufacturing system according to the present disclosure may include a first transfer line transferring a first electrode; a second transfer line transferring a second electrode having an opposite polarity to the first electrode; a first mark forming unit forming a mark on an electrode tab of the first electrode; a second mark forming unit forming a mark on an electrode tab of the second electrode; and a coupling unit coupling the first electrode and the second electrode so that the first electrode tab and the second electrode tab are disposed in opposite directions, wherein the coupling unit may couple the first electrode and the second electrode so that an imaginary line connecting the mark formed on the first electrode tab and the mark formed on the second electrode tab is parallel to the longitudinal direction of the first electrode and the second electrode.

The first mark forming unit may include a first marker that forms the first mark by applying a colored liquid substance to a widthwise center portion of the first electrode tab, and the second mark forming unit may include a second marker that forms the second mark by applying a colored liquid substance to a widthwise center portion of the second electrode tab.

The coupling unit may include a bonding device that bonds the first electrode and the second electrode so that the widthwise center line of the first electrode extending from the first mark coincides with the widthwise center line of the second electrode extending from the second mark.

Meanwhile, an electrode assembly according to the present disclosure may include a first electrode; a second electrode having an opposite polarity to the first electrode; and a separator interposed between the first electrode and the second electrode, wherein marks may be formed on each of tab portions of the first electrode and the second electrode, and an imaginary line connecting the mark formed on the first electrode tab and the mark formed on the second electrode tab may be parallel to the longitudinal direction of the first electrode and the second electrode.

The imaginary line may coincide with the widthwise center line of each of the first electrode and the second electrode.

### ADVANTAGEOUS EFFECTS

According to the electrode assembly manufacturing method according to one embodiment of the present disclosure, an imaginary line connecting the mark formed on the first electrode tab and the mark formed on the second electrode tab may be parallel to the longitudinal direction of the first electrode and the second electrode, thereby allowing the widthwise centers of the first electrode and the second electrode to accurately coincide with each other.

### BRIEF DESCRIPTION OF THE DRAWINGS

FIG. 1 is a view for schematically describing a state in which a first electrode and a second electrode are coupled in an electrode assembly manufacturing method according to one embodiment of the present disclosure.
FIG. 2 is a view for describing a state in which a separator is attached to an electrode in an electrode assembly manufacturing method according to one embodiment of the present disclosure.
FIG. 3 is a flowchart for describing the sequence of steps in an electrode assembly manufacturing method according to one embodiment of the present disclosure.
FIG. 4 is a flowchart for specifically describing the marking step illustrated in FIG. 2.
FIG. 5 is a view for describing a state in which marks are formed on a first electrode and a second electrode in an electrode assembly manufacturing system according to one embodiment of the present disclosure.
FIG. 6 is a view for describing a state in which a first electrode and a second electrode are coupled in an electrode assembly manufacturing system according to one embodiment of the present disclosure.
FIG. 7 is a perspective view showing an electrode assembly according to one embodiment of the present disclosure.
FIG. 8 is a plan view of the electrode assembly illustrated in FIG. 7.

### DETAILED DESCRIPTION

Hereinafter, preferred embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Hereinafter, an electrode assembly manufacturing method, an electrode assembly manufacturing system, and an electrode assembly according to the present disclosure will be described with reference to the drawings.

### Electrode assembly manufacturing method

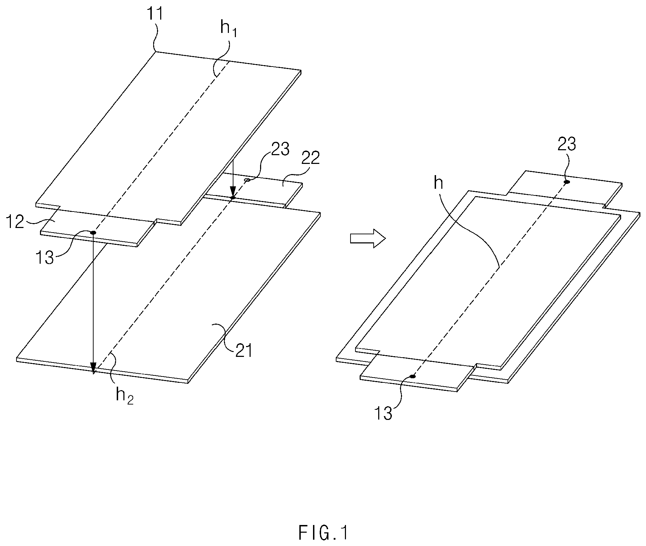

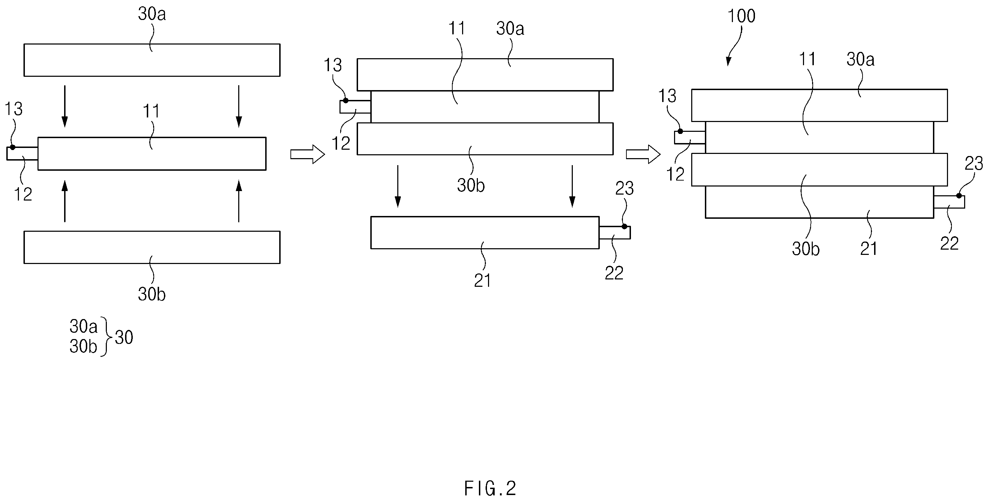

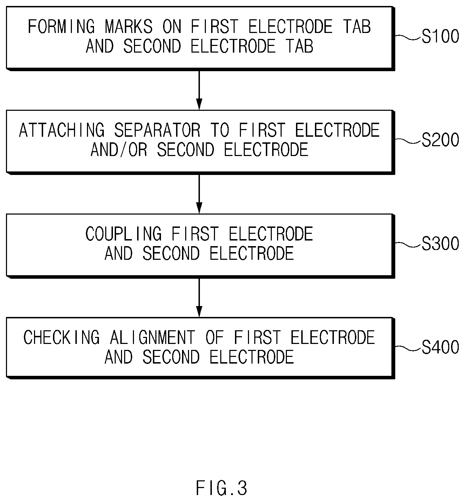

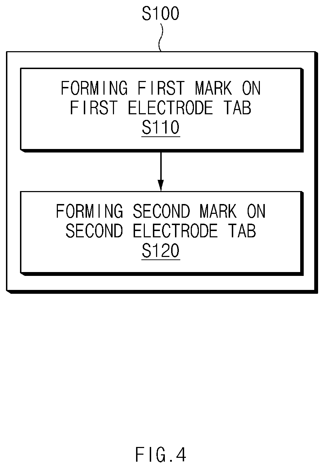

FIG. 1 is a view for schematically describing a state in which a first electrode and a second electrode are coupled in an electrode assembly manufacturing method according to one embodiment of the present disclosure, and FIG. 2 is a view for describing a state in which a separator is attached to an electrode in an electrode assembly manufacturing method according to one embodiment of the present disclosure. FIG. 3 is a flowchart for describing the sequence of steps in an electrode assembly manufacturing method according to one embodiment of the present disclosure, and FIG. 4 is a flowchart for specifically describing the marking step illustrated in FIG. 2.

Referring to FIGS. 1 to 4, an electrode assembly manufacturing method according to one embodiment of the present disclosure may include a marking step S100 of forming marks 13, 23 on tab portions 12, 22 of each of a first electrode 10 and a second electrode 20 having opposite polarities; and a coupling step S300 of coupling the first electrode 10 and the second electrode 20 so that the first electrode tab 12 and the second electrode tab 22 are disposed in opposite directions. At this time, in the coupling step S300, an imaginary line (h) connecting the mark 13 formed on the first electrode tab 12 and the mark 23 formed on the second electrode tab 22 may be parallel to the longitudinal direction of the first electrode 10 and the second electrode 20.

The first electrode 10 and the second electrode 20 are electrode plates having opposite polarities, and the first electrode 10 may be a positive electrode and the second electrode 20 may be a negative electrode. Additionally, the first electrode 10 may be a positive electrode and the second electrode 20 may be a positive electrode.

The first electrode 10 may include a first coated portion 11 that is coated with an active material on a current collector and a first electrode uncoated portion that is not coated with an active material. Here, a part of the first electrode uncoated portion may be cut to form the first electrode tab 12.

The second electrode 20, like the first electrode 10, may include a second coated portion 21 that is coated with an active material on a current collector and a second electrode uncoated portion that is not coated with an active material. A part of the second electrode uncoated portion may be cut to form the second electrode tab 22.

The marking step S100 is a step of forming marks 13, 23 on the first electrode tab 12 and the second electrode tab 22, respectively, and the marks 13, 23 may be formed at various positions of the first electrode tab 12 and the second electrode tab 22. In particular, in the marking step S100, the first and second marks 13, 23 may be formed at the widthwise center portions of the first electrode tab 12 and the second electrode tab 22, respectively.

Specifically, the marking step S100 may include a first marking step S110 of forming the first mark 13 on the widthwise center portion of the first electrode tab 12; and a second marking step S120 of forming the second mark 23 on the widthwise center portion of the second electrode tab 22. In this case, the first electrode 10 and the second electrode 20 may have coincident centers in the width direction. That is, the first electrode 10 and the second electrode 20 have mutually coincident centers in the width direction, and are coupled in a parallel direction without being twisted, which may prevent the occurrence of manufacturing defects in the electrode assembly.

The first marking step S110 may be performed in the sequence of recognizing the widthwise center of the first electrode tab 12 and then forming the first mark 13 on the recognized portion. At this time, the process of recognizing the widthwise center of the first electrode tab 12 may be performed using imaging equipment and a computer connected thereto.

Specifically, a camera or a vision sensor may be used for such imaging equipment. Such imaging equipment may recognize the shape and standard of the entire first electrode tab 12 and transmit the corresponding information to the computer. Using the information received, the computer may calculate the widthwise center line of the first electrode tab 12. The first mark 13 may then be formed on a portion of the center line calculated by the computer.

The first mark 13 may be formed by an ink application device or the like to be described later. This ink application device may be operated by a command from the computer. Specifically, the computer may command the ink application device to apply ink to a portion of the widthwise center line of the first electrode tab 12 to form the first mark 13.

Likewise, the second marking step S120 may be performed in the sequence of recognizing the widthwise center of the second electrode tab 22 and then forming the second mark 23 on the recognized portion. At this time, the process of recognizing the widthwise center of the second electrode tab 22 may be performed using imaging equipment and a computer connected thereto.

Specifically, a camera or a vision sensor may be used for such imaging equipment. Such imaging equipment may recognize the shape and standard of the entire second electrode tab 22 and transmit the corresponding information to the computer. Using the information received, the computer may calculate the widthwise center line of the second electrode tab 22. The second mark 23 may then be formed on a portion of the center line calculated by the computer.

The second mark 23 may also be formed by the ink application device. The ink application device may be operated by a command from the computer. Specifically, the computer may command the ink application device to apply ink to a portion of the widthwise center line of the second electrode tab 22 to form the second mark 23.

Meanwhile, the first marking step 110 may be a step of forming the first mark 13 on the widthwise center portion of the electrode tab 12 of the first electrode 10 running on the first conveyor belt or the first sheet, and the second marking step S120 may be a step of forming the second mark 23 on the widthwise center portion of the electrode tab 22 of the second electrode 20 running on the second conveyor belt or the second sheet.

Here, the first marking step S110 and the second marking step S120 may be performed in various sequences. For example, the first marking step S110 and the second marking step S120 may be performed simultaneously or sequentially.

Meanwhile, the marking step S100 may include a step of applying a colored liquid substance to the first electrode tab 12 and the second electrode tab 22; and a step of drying the colored liquid substance to form the marks 13, 23. The step of applying the colored liquid substance may be performed by various devices. For example, the application of the colored liquid substance may be performed by a conventional ink application device.

Specifically, in the first marking step S110, a colored liquid substance is applied to the widthwise center of the first electrode tab 12, and this liquid substance may be dried to form the first mark 13. Additionally, in the second marking step S120, a colored liquid substance is applied to the widthwise center of the second electrode tab 22, and this liquid substance may be dried to form the second mark 23.

At this time, the step of applying the colored liquid substance to the widthwise center of the first electrode tab 12 and the step of applying the colored liquid substance to the widthwise center of the second electrode tab 22 may be performed simultaneously or sequentially. Additionally, the step of drying the colored liquid substance applied to the first electrode tab 12 and the step of drying the colored liquid substance applied to the second electrode tab 22 may be performed simultaneously or sequentially.

Meanwhile, the electrode assembly manufacturing method according to one embodiment of the present disclosure may further include an attachment step S200 that is performed after the marking step S100 and attaches a separator 30 to at least one of the first electrode 10 and the second electrode 20. That is, this attachment step S200 may be performed between the marking step S100 and the coupling step S300.

The attachment step S200 may attach the separator 30 to at least one of the first electrode 10 and the second electrode 20 in various ways. For example, the attachment step S200 may be a step of attaching the first and second separators 30a, 30b to both surfaces of the first electrode 10. Specifically, the attachment step S200 may include a step of attaching a first separator sheet 30a to one surface of the first electrode 10; and a step of attaching a second separator sheet 30b to the other surface of the first electrode 10.

In this way, the process of attaching the first and second separators 30a, 30b to both surfaces of the first electrode 10 is illustrated in FIG. 2. The first electrode 10 to which the first and second separators 30a, 30b are attached may be coupled to the second electrode 20. That is, when both the first and second separators 30a, 30b are attached to the first electrode 10, the above-described coupling step S300 may be a step of coupling the first electrode 10 where the first and second separators 30a, 30b are attached to both surfaces to the second electrode 20. In this case, the first separator 30a or the second separator 30b may be interposed between the first electrode 10 and the second electrode 30.

Meanwhile, the attachment step S200 may be a step of attaching the first separator 30a to the first electrode 10 and attaching the second separator 30b to the second electrode 20. In this case, each one of the separators 30a, 30b is attached to each of one surfaces of the first electrode 10 and the second electrode 20, and the first electrode 10 and the second electrode 20 to which one surfaces of the separators 30a, 30b is attached may be coupled in the coupling step S300. At this time, the first separator 30a or the second separator 30b may be interposed between the first electrode 10 and the second electrode 30.

Additionally, the attachment step S200 may be a step of attaching the first and second separators 30a, 30b to both surfaces of the second electrode 20. Specifically, the attachment step S200 may include a step of attaching the first separator sheet 30a to one surface of the second electrode 20; and a step of attaching the second separator sheet 30b to the other surface of the second electrode 20. In this case, the coupling step S300 may be a step of coupling the first electrode 10 to the second electrode 20 where the first and second separators 30a, 30b are attached to both surfaces. At this time, the first separator 30a or the second separator 30b may be interposed between the first electrode 10 and the second electrode 30.

Meanwhile, the coupling step S300 is a step of coupling the first electrode 10 and the second electrode 20 so that the widthwise centers thereof coincide with each other, and may be performed in various ways. In this coupling step S300, a controller such as a computer may form an imaginary widthwise center line h1 of the first electrode 10 passing through the first mark 13 described above, using imaging equipment.

Additionally, the controller may form an imaginary widthwise center line h2 of the second electrode 20 passing through the second mark 23, using imaging equipment. Thereafter, the controller may input the first electrode 10 and the second electrode 20 into the bonding device so that the two center lines h1, h2 face each other. Thereafter, the bonding device may apply heat and pressure to the first electrode 10 and the second electrode 20 to couple the first electrode 10 and the second electrode 20.

In this case, the imaginary line (h) connecting the first mark 13 and the second mark 23 in a straight line may coincide with the widthwise center lines of the first electrode 10 and the second electrode 20. In this case, the first electrode 10 and the second electrode 20 may have coincident centers in the width direction. That is, the first electrode 10 and the second electrode 20 have mutually coincident centers in the width direction, and are coupled in a parallel direction without being twisted, which may prevent the occurrence of manufacturing defects in the electrode assembly.

Meanwhile, the electrode assembly manufacturing method according to one embodiment of the present disclosure may include a verification step S400 that is performed after the coupling step S300 and checks whether the widthwise center line h1 of the first electrode 10 coincides with the widthwise center line h2 of the second electrode 20. This verification step S400 may be performed using imaging equipment such as a camera or a vision sensor and a computer connected thereto.

Specifically, the computer may form a widthwise center line h1 on the first electrode 10 using imaging equipment, and may also form a widthwise center line h2 on the second electrode 20. Thereafter, the computer may check whether such center lines h1, h2 coincide with an imaginary line (h) connecting the first mark 13 and the second mark 23 in a straight line.

That is, this verification step S400 may be a step of double-checking whether the first electrode 10 and the second electrode 20 are coupled in parallel. That is, the electrode assembly manufacturing method according to one embodiment of the present disclosure has an advantageous effect of reducing the manufacturing defect rate of the electrode assembly by including the verification step S400 described above.

Meanwhile, the verification step S400 may be performed by checking whether the imaginary line (h) connecting the first mark 13 and the second mark 23 in a straight line is parallel to the longitudinal direction of each of the first electrode 10 and the second electrode 20. This method may be performed using imaging equipment such as a camera or a vision sensor and a computer connected thereto. Even in this case, it is possible to check whether the first electrode 10 and the second electrode 20 are coupled in parallel, and thus there is an advantageous effect of reducing the manufacturing defect rate of the electrode assembly.

### Electrode assembly manufacturing system

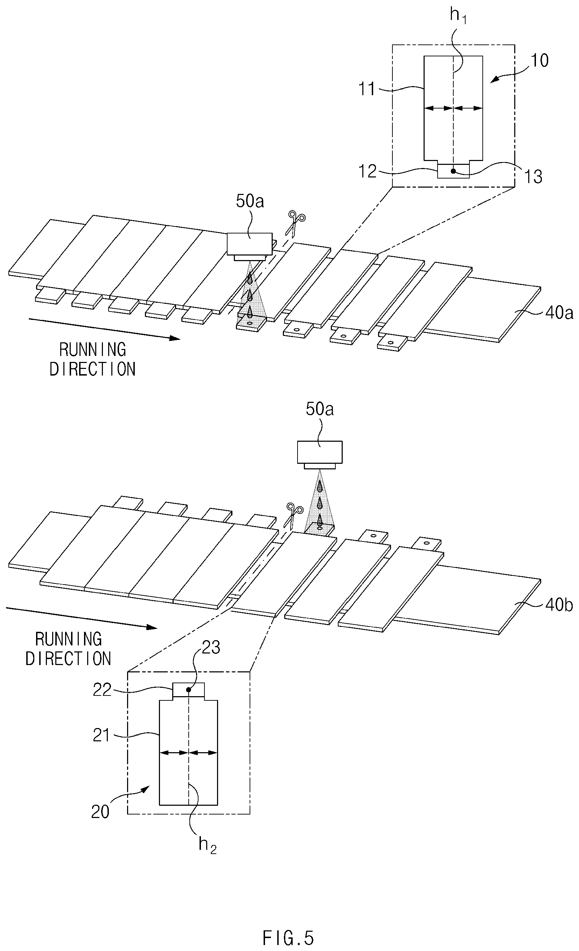

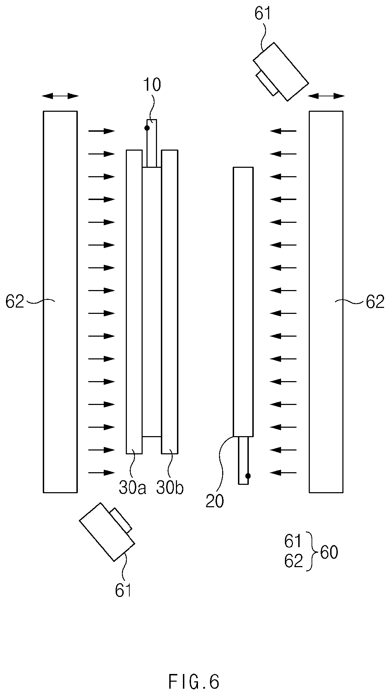

FIG. 5 is a view for describing a state in which marks are formed on a first electrode and a second electrode in an electrode assembly manufacturing system according to one embodiment of the present disclosure. FIG. 6 is a view for describing a state in which a first electrode and a second electrode are coupled in an electrode assembly manufacturing system according to one embodiment of the present disclosure.

Referring to FIGS. 5 and 6, an electrode assembly manufacturing system according to one embodiment of the present disclosure may include a first transfer line 40a transferring a first electrode 10; a second transfer line 40b transferring a second electrode 20 having an opposite polarity to the first electrode 10; a first mark forming unit 50a forming a mark 13 on an electrode tab 12 of the first electrode 10; a second mark forming unit 50b forming a mark 23 on an electrode tab 22 of the second electrode 20; and a coupling unit 60 coupling the first electrode 10 and the second electrode 20 so that the first electrode tab 12 and the second electrode tab 22 are disposed in opposite directions. This coupling unit 60 may couple the first electrode 10 and the second electrode 20 so that the imaginary line (h) connecting the mark 13 formed on the first electrode tab 12 and the mark 23 formed on the second electrode tab 22 is parallel to the longitudinal direction of the first electrode 10 and the second electrode 20.

The first and second transfer lines 40a, 40b are transfer devices that transfer the first electrode 10 and the second electrode 20, respectively, and may be formed in various ways. For example, the first and second transfer lines 40a, 40b may be conveyor belts or transfer sheets that transfer the first electrode 10 and the second electrode 20 in one direction, respectively. These first and second transfer lines 40a, 40b may transfer each of the first electrode 10 and the second electrode 20 to the coupling unit 60.

The first and second mark forming units 50a, 50b form the first mark 13 and the second mark 23 on the first electrode tab 12 and the second electrode tab 22, respectively, and may be configured in various ways. For example, the first and second mark forming units 50a, 50b may each include imaging equipment and markers connected to a controller such as a computer.

The computer may recognize the widthwise center of each of the first electrode tab 12 and the second electrode tab 22 using the imaging equipment, and the marker may apply ink to the recognized widthwise center of the first electrode tab 12 and the second electrode tab 22 to form the first mark 13 and the second mark 23. The marker is an ink application device that drops colored liquid ink, and the ink dropped on the widthwise center of the first electrode tab 12 and the second electrode tab 22 may be dried to form the first mark 13 and the second mark 23.

A camera or a vision sensor may be used for such imaging equipment. Such imaging equipment may recognize the shape and standard of the entire first electrode tab 12 and transmit the corresponding information to the computer. Using the information received, the computer may calculate the widthwise center line of the first electrode tab 12. The first mark 13 may then be formed on a portion of the center line calculated by the computer.

Additionally, the imaging equipment may recognize the shape and standard of the entire second electrode tab 22 and transmit the corresponding information to the computer. Using the information received, the computer may calculate the widthwise center line of the second electrode tab 22. The second mark 23 may then be formed on a portion of the center line calculated by the computer.

Ink may be dropped to the widthwise centers of the first electrode tab 12 and the second electrode tab 22 by different markers. That is, the first mark forming unit 50a may include a first marker forming the first mark 13 on the widthwise center of the first electrode tab 12, and the second mark forming unit 50b may include a second marker forming the second mark 23 on the widthwise center of the second electrode tab 22.

The first marker and the second marker may be operated by a command from the computer. Specifically, the computer may command the first marker to apply ink to a portion of the widthwise center line of the first electrode tab 12 to form the first mark 13. Additionally, the computer may command the second marker to apply ink to a portion of the widthwise center line of the second electrode tab 22 to form the second mark 23.

Meanwhile, when the first and second marks 13, 23 are formed on the widthwise centers of the first electrode tab 12 and the second electrode tab 22, respectively, an imaginary line connecting the first and second marks 13, 23 in a straight line may coincide with the widthwise center lines of the first electrode 10 and the second electrode 20. Specifically, the first electrode 10 and the second electrode 20 are coupled in parallel in the width direction by the coupling unit 60, and thus when the first and second marks 13, 23 are formed on the widthwise centers of the first electrode tab 12 and the second electrode tab 22, respectively, the line connecting them in a straight line may coincide with the widthwise center lines of the first electrode 10 and the second electrode 20.

In this case, the first electrode 10 and the second electrode 20 have mutually coincident centers in the width direction, and are coupled in a parallel direction without being twisted, which may prevent the occurrence of manufacturing defects in the electrode assembly.

Meanwhile, the coupling unit 60 is a device for coupling the first electrode 10 and the second electrode 20 so that the widthwise centers of each of the first electrode 10 and the second electrode 20 coincide with each other, and may be formed in various ways. For example, the coupling unit 60 may include a camera 61 and a bonding device 62 connected to a controller such as a computer.

The computer may form center lines h1, h2 on the first electrode 10 and the second electrode 20, respectively, using the camera 61. Thereafter, the computer may check whether the first electrode 10 and the second electrode 20 are disposed so that the center line h1 of the first electrode 10 and the center line h2 of the second electrode 20 face each other.

When the first electrode 10 and the second electrode 20 are disposed so that the center line h1 of the first electrode 10 and the center line h2 of the second electrode 20 face each other, the bonding device 62 may be operated to bond the first electrode 10 and the second electrode 20. The bonding device 62 is a device that applies heat and pressure to the first electrode 10 and the second electrode 20 to thermally fuse the first electrode 10 and the second electrode 20, and various devices may be used for this. For example, a conventional heat press device may be used for the bonding device 62.

In this case, the first electrode 10 and the second electrode 20 have mutually coincident centers in the width direction, and are coupled in a parallel direction without being twisted, which may prevent the occurrence of manufacturing defects in the electrode assembly.

Meanwhile, the camera 61 described above may be used to check whether the imaginary line (h) connecting the first mark 13 and the second mark 23 in a straight line is parallel to the longitudinal direction of each of the first electrode 10 and the second electrode 20. In this case, the operator may check whether the first electrode 10 and the second electrode 20 are coupled in parallel, and thus there is an advantageous effect of reducing the manufacturing defect rate of the electrode assembly.

### Electrode assembly

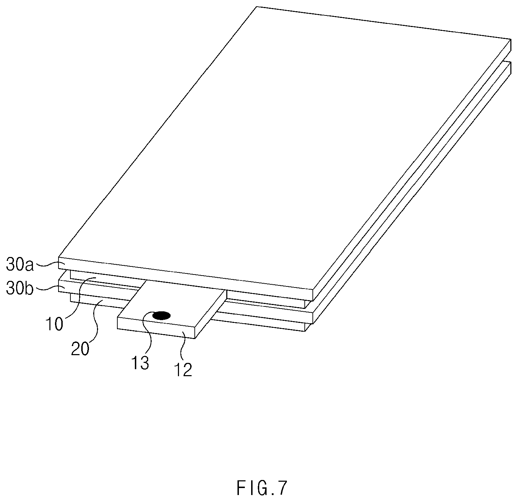

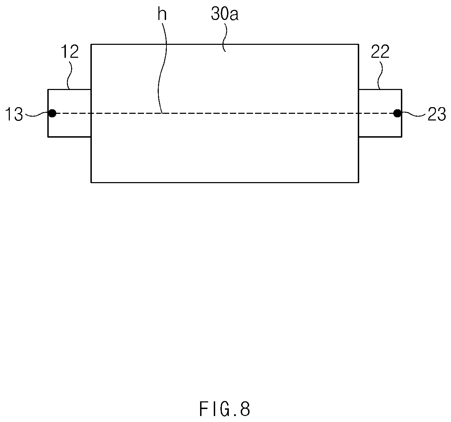

FIG. 7 is a perspective view showing an electrode assembly according to one embodiment of the present disclosure. FIG. 8 is a plan view of the electrode assembly illustrated in FIG. 7.

Referring to FIGS. 7 and 8, an electrode assembly according to one embodiment of the present disclosure may include a first electrode 10; a second electrode 20 having an opposite polarity to the first electrode 10; and a separator 30 interposed between the first electrode 10 and the second electrode 20, wherein marks 13, 23 may be formed on tab portions 12, 22 of the first electrode 10 and the second electrode 20, respectively. Here, an imaginary line (h) connecting the mark 13 formed on the first electrode tab 12 and the mark 23 formed on the second electrode tab 22 may be formed parallel to the longitudinal direction of the first electrode 10 and the second electrode 20.

In particular, the imaginary line (h) may coincide with the widthwise center lines h1, h2 of each of the first electrode 10 and the second electrode 20. In this case, the first electrode 10 and the second electrode 20 have mutually coincident centers in the width direction, and are coupled in a parallel direction without being twisted, which may prevent the occurrence of manufacturing defects in the electrode assembly.

The present disclosure has been hereinabove described with regard to a limited number of embodiments and drawings, but the present disclosure is not limited thereto and may be embodied in different forms by those having ordinary skill in the art within the technical aspect of the present disclosure and the scope of the appended claims and their equivalents.

**[List of Reference Numerals]**

| | | | |
|---|---|---|---|
| 10: | First electrode | 20: | Second electrode |
| 30: | Separator | 40: | Conveyor belt |
| 50: | Mark forming unit | 60: | Coupling unit |
| S100: | Marking step | S200: | Attachment step |
| S300: | Coupling step | S400: | Verification step |

## Claims

1. An electrode assembly manufacturing method, comprising:
a marking step of forming a mark on a tab portion of each of a first electrode and a second electrode having opposite polarities; and
a coupling step of coupling the first electrode and the second electrode so that the first electrode tab and the second electrode tab are disposed in opposite directions,
wherein in the coupling step, an imaginary line connecting the mark formed on the first electrode tab and the mark formed on the second electrode tab is parallel to the longitudinal direction of the first electrode and the second electrode.

2. The electrode assembly manufacturing method according to claim 1,
wherein the marking step comprises:
a first marking step of recognizing a widthwise center line of the first electrode tab using imaging equipment and a computer, and forming a mark on a portion of the widthwise center line of the first electrode tab; and
a second marking step of recognizing a widthwise center line of the second electrode tab using imaging equipment and a computer, and forming a mark on a portion of the widthwise center line of the second electrode tab.

3. The electrode assembly manufacturing method according to claim 2,
wherein the coupling step comprises a step of coupling the first electrode and the second electrode so that the imaginary line coincides with the widthwise center lines of the first electrode and the second electrode.

4. The electrode assembly manufacturing method according to claim 2,
wherein the first marking step and the second marking step are performed simultaneously or sequentially.

5. The electrode assembly manufacturing method according to claim 1,
wherein the marking step comprises:
a step of applying a colored liquid substance to the first electrode tab and the second electrode tab; and
a step of drying the colored liquid substance to form a mark.

6. The electrode assembly manufacturing method according to claim 3, further comprising:
a verification step that is performed after the coupling step and checks whether the widthwise center line of the first electrode coincides with the widthwise center line of the second electrode.

7. The electrode assembly manufacturing method according to claim 6,
wherein the verification step comprises a step of checking whether the imaginary line is parallel to the longitudinal direction of each of the first electrode and the second electrode.

8. The electrode assembly manufacturing method according to claim 1,
wherein the marking step comprises a step of forming the marks on the tab portions of the first electrode and the second electrode being transferred along conveyor belts.

9. The electrode assembly manufacturing method according to claim 8, further comprising:
an attachment step that is performed after the marking step and attaches a separator to at least one of the first electrode and the second electrode.

10. The electrode assembly manufacturing method according to claim 9,
wherein the attachment step comprises:
attaching a first separator sheet to one surface of the first electrode; and
attaching a second separator sheet to the other surface of the first electrode.

11. The electrode assembly manufacturing method according to claim 10,
wherein the coupling step comprises a step of coupling the first electrode and the second electrode so that the second separator sheet is positioned between the first electrode and the second electrode.

12. An electrode assembly manufacturing system, comprising:
a first transfer line transferring a first electrode;
a second transfer line transferring a second electrode having an opposite polarity to the first electrode;
a first mark forming unit forming a mark on an electrode tab of the first electrode;
a second mark forming unit forming a mark on an electrode tab of the second electrode; and
a coupling unit coupling the first electrode and the second electrode so that the first electrode tab and the second electrode tab are disposed in opposite directions,
wherein the coupling unit couples the first electrode and the second electrode so that an imaginary line connecting the mark formed on the first electrode tab and the mark formed on the second electrode tab is parallel to the longitudinal direction of the first electrode and the second electrode.

13. The electrode assembly manufacturing system according to claim 12,
wherein the first mark forming unit comprises a first marker that forms the first mark by applying a colored liquid substance to a widthwise center portion of the first electrode tab, and
the second mark forming unit comprises a second marker that forms the second mark by applying a colored liquid substance to a widthwise center portion of the second electrode tab.

14. The electrode assembly manufacturing system according to claim 13,
wherein the coupling unit comprises a bonding device that bonds the first electrode and the second electrode so that the widthwise center line of the first electrode extending from the first mark coincides with the widthwise center line of the second electrode extending from the second mark.

15. An electrode assembly, comprising:
a first electrode;
a second electrode having an opposite polarity to the first electrode; and
a separator interposed between the first electrode and the second electrode,
wherein marks are formed on each of tab portions of the first electrode and the second electrode, and
an imaginary line connecting the mark formed on the first electrode tab and the mark formed on the second electrode tab is parallel to the longitudinal direction of the first electrode and the second electrode.

16. The electrode assembly according to claim 15,
wherein the imaginary line coincides with the widthwise center line of each of the first electrode and the second electrode.
